# EUROPEAN PATENT SPECIFICATION

(11) **EP 3 863 078 B1**
(45) Date of publication and mention of the grant of the patent: **07.08.2024**
(21) Application number: 20155938.2
(22) Date of filing: 06.02.2020
(51) Int. Cl.: H01M 50/502

(54) **CELL CONNECTION UNIT, CCU, FOR A BATTERY MODULE**
ZELLENANSCHLUSSEINHEIT (CCU) FÜR EIN BATTERIEMODUL
UNITÉ DE CONNEXION DE CELLULES, CCU, POUR UN MODULE DE BATTERIES

(43) Date of publication of application: 11.08.2021
(73) Proprietor: Samsung SDI Co., Ltd., Gyeonggi-do 17084 (KR)
(72) Inventor: Röck, Alexander, 8793 Trofaiach (AT); Brandner, Thomas, 8582 Rosental (AT); Haring, Fritz, 8600 Bruck an der Mur (AT); Brandstätter, Stefan, 8111 Gratwein-Straßengel (AT)
(74) Representative: Gulde & Partner

(56) References cited:
- DE-A1- 102013 221 872
- DE-A1- 102013 222 090
- JP-A- 2010 097 722

## Description

### Field of the Invention

The present invention relates to a cell connection unit, CCU, for a battery system, particularly to a modular concept for a cell connection unit for improved mounting and handling. The present invention further relates to a battery module with such a cell connection unit.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for electronic devices, such as cellular phones, notebooks and camcorders, while high-capacity rechargeable batteries are used as power supply for hybrid vehicles or the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs, each battery cell is coupled to a common current collector structure and a common battery management system. In modular designs, pluralities of battery cells are connected to form submodules and several submodules are connected to form the battery module. Battery management functions may be realized either on module or submodule level and thus interchangeability of the components is improved. One or more battery modules are mechanically and electrically integrated, equipped with a thermal management system and set up for communication with electrical consumers in order to form a battery system.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Battery systems usually comprise a battery management system (BMS) and/or battery management unit (BMU) for processing the aforementioned information. The BMS/BMU may communicate to the controllers of the various electrical consumers via a suitable communication bus, e.g. a SPI or CAN interface. The BMS/BMU may further communicate with each of the battery submodules, particularly with a cell supervision circuit (CSC) of each battery submodule. The CSC may be further connected to a cell connection unit (CCU) of a battery submodule that interconnects the battery cells of the battery submodule.

The CCU of a battery module is usually designed to electrically interconnect the battery cells of the battery submodule, particularly the cell terminals of the battery cells. Therefore, the CCU usually comprises a plurality of busbars, each of which is interconnecting the cell terminals of at least some battery cells. For manufacturers it is advantageous if the CCU is provided as a monolithic structure that enables to mount all the busbars to the battery module at once, preferably in an automated or at least semi-automated fabrication method. From the prior art it is known to provide CCUs that comprise a plurality of busbars which are injection molded with a plastic material to form a monolithic unit. Alternatively it is known to position a plurality of busbars between to layers, e.g., insulating foil layers with predefined openings that correspond to the positions of cell terminals, and to fixedly connect the layers, e.g., thermally.

JP2010097722A discloses a battery module with battery cells connected via connection members, the connection members being connected via electrically-conductive members. DE102013221872A1 discloses a battery module with band-shaped connectors and busbars.

However, according to the known concepts mountable CCUs are disadvantageously provided as indeed monolithic units, wherein the busbars are connected to each other in an essentially inextricable manner. Thus, an adaptability of the CCUs to different battery modules is limited and production of battery modules is complicated and more expensive.

It is thus an object of the present invention to overcome or reduce at least some of the drawbacks of the prior art and to provide solutions for a cell connection unit that has an increased variability and is usable for connecting battery cells of various battery modules.

### Summary of Invention

One or more of the drawbacks of the prior art could be avoided or at least reduced by means of the present disclosure. According to an aspect of the disclosure, a cell connection unit, CCU, is provided for connecting a plurality of aligned battery cells of a battery module. Preferably, the battery cells are prismatic battery cells and/or aligned in a stacking direction of the module. The CCU of the present invention comprises a plurality of busbars, wherein each busbar is configured to be connected to cell terminals of at least two battery cells. Thus busbars are preferably bar-shaped aluminum busbars that are fitted to the size of the cell terminals to be connected. The busbars may further comprise bent and/or flexible portions.

The CCU of the present disclosure further comprises a plurality of carrier rails that are configured to interconnect the plurality of busbars of the CCU. Therefore, the carrier rails act as carrying structures of the CCU that connect to the busbars. The carrier rails of the present disclosure are preferably linearly shaped and are hence configured as a rail. According to the present disclosure each carrier rail of the plurality is configured to be mechanically connected to a plurality of busbars and comprises a plurality of reception regions, wherein each reception region is configured to be mechanically connected to at least one individual busbar.

As described in more detail below, the carrier rails preferably comprise terminal carrier rails positioned at a terminal end of the CCU and inset carrier rails that are not positioned at terminal ends of the CCU. The carrier rails of the CCU are mechanically connected to three busbars. Each of the inset carrier rails, comprise a first reception region that is configured to be connected to at least one bus bar and further comprise a separate second reception region. The second reception region is configured to be connected to two busbars and to electrically insulate these two busbars from each other. The design of the terminal carrier rails may differ from the design of the inset carrier rails, as the terminal carrier rails usually have to connect less busbars than the inset carrier rails.

The cell connection unit of the present disclosure comprises two terminal busbars that are configured to be connected to cell terminals of a plurality of n battery cells, wherein n is an integer. Therein, at least one battery cell connected by the terminal busbar is a terminal battery cell of the battery module, i.e., a battery cell having only on one side another battery cell of the battery module. Further, the remaining busbars of the plurality of busbars of the cell connection unit are inset busbars that are configured to be connected to cell terminals of 2*n battery cells, i.e., to the double amount of battery cells compared to the terminal busbars. Further, the plurality of carrier rails comprises two terminal carrier rails forming terminal ends of the CCU and wherein the remaining carrier rails are inset carrier rails.

The CCU of the present disclosure, as described in a most general way above, advantageously provides a modular system for constructing a CCU that is configured for electrically interconnecting the battery cells of a battery module, while being lightweight and while being suitable for automated or semi-automated fabrication of battery modules. Particularly, the CCU of the present disclosure can be handled as a whole and thus the handling of individual busbars is not required in mounting a battery module. At the same time, the CCU of the present disclosure is easily adapted to different battery module designs.

According to the present disclosure, a carrier rail, preferably each of the carrier rails (e.g., inset carrier rails and terminal carrier rails), extends in a longitudinal direction. When the battery cells of the battery module are aligned in a stacking direction of the battery module, the longitudinal direction of the cell carrier is preferably perpendicular to the stacking direction. The carrier rails, preferably each of the inset carrier rails, comprise a first reception region configured for receiving a busbar. Therein, the first reception region comprises a reception space that is oriented in the longitudinal direction of the carrier rail. In other words, the reception space is opened at one side and the opening is facing in the longitudinal direction. Put differently, the first reception region is essentially U-shaped with two legs of the first reception region enclosing the reception space of that region. For receiving a busbar in the first reception region, the busbar can thus be slid into the reception space along the longitudinal direction of the carrier rail. The reception space may further comprise guiding means and/or latching means for positioning and/or latching the busbar in the reception space. Preferably, the whole width of the busbar is received by the reception space and/or the busbar does not need a specific design for being compatible with the reception space. Preferably a busbar part that is received by the reception space is flat and/or a thickness of that part corresponds to an opening width of the reception space.

According to the present disclosure, wherein a carrier rail extends in a longitudinal direction, each of the inset carrier rails comprises a second reception region. Therein, if the carrier rail extends in the longitudinal direction, the first reception region is preferably at one terminal end of the carrier rail and the second reception region is preferably at a second terminal end of the carrier rail that is spaced apart from the first terminal end. The second reception region comprises a first reception aperture that is oriented in a first direction, wherein the first direction is perpendicular to the longitudinal direction of the carrier rail. Further, the second reception region comprises a second reception aperture that is oriented in a second direction which is opposite to the first direction. In the context of this disclosure, an orientation of a reception aperture refers to the facing direction of that reception aperture, particularly of an opening of the reception aperture. The first reception aperture of this embodiment is electrically insulated from the second reception aperture.

According to the preferred embodiment, a first busbar can be connected to the second reception region by receiving at least a part of the first busbar by the first reception aperture. Therein, the part of the first busbar is preferably received along the second direction. Further, a second busbar can be connected to the second reception region by receiving at least part of the second busbar by the second reception aperture. Therein, the part of the second busbar is preferably received along the first direction. Hence, two busbar can be connected to a single carrier rail in the second reception region. Further preferred, the first and second reception aperture can be shifted with respect to each other along the longitudinal direction of the carrier rail. However, the first and second reception aperture may also be disposed in the same longitudinal section of the second reception region and separated from each other solely by a partition wall of the carrier rail between the first and second reception apertures.

Further preferred, the carrier rails of the cell connection unit according to the present disclosure are formed of a plastic material, particularly preferred from a lightweight plastic material. The plastic material may comprise one or more of from PP, PE, PI, LDPE, HDPE or the like. Further, the plastic material may be a filled plastic material, wherein the filling may comprise reinforcing fibers or the like. In combination with aluminum busbars or busbars comprising aluminum, the carrier rails of this embodiment realize a lightweight CCU. The material of the carrier rails is preferably an electrically insulating material.

Although being lightweight, the interconnected pluralities of busbars and carrier rails together preferably form a rigid structure that enables automated mounting of the CCU to a battery module. Further preferred, the interconnected pluralities of busbars and carrier rails are of an essentially planar shape that can neither be twisted nor bent, butted or elongated. In combination with the lightweight materials of the CCU the handling of the CCU is improved.

In a particularly preferred embodiment, each of the first and second reception apertures of the second reception region comprises guiding means that are configured for facilitating the receiving of a busbar, particularly of a connection portion of a busbar as described below. The guiding means are preferably configured to allow an insertion of a part of a busbar into the respective reception aperture only in a single configuration, e.g., orientation, of the busbar. Further preferred, each of the first and second reception apertures of the second reception region comprises latching means that are configured for latching a received portion of a busbar, particularly for latching a received connection portion of a busbar. Therein, the guiding means are preferably configured as fitting counterparts to guiding elements formed in the connection portion of a busbar. Further preferred, the latching means comprise flexibly moving and/or elastic elements configured for holding counterparts of the connection portion.

Further preferred, the inset busbars have a linear extension that is essentially double the linear extension of the terminal busbars. The shape of terminal busbars may further differ from the shape of the terminal busbars, e.g., for providing contactable module terminals. Further preferred, the plurality of carrier rails of the CCU of the present disclosure comprises two terminal carrier rails and the remaining carrier rails are inset carrier rails of the CCU.

The terminal carrier rails preferably comprise two third reception regions, each of which is positioned at a terminal end of the terminal carrier rail. Further preferred, each of the third reception regions comprises a third reception aperture that is configured for receiving a part of a busbar therein, particularly for receiving a connection portion of a busbar therein. The third reception apertures are preferably both facing towards the inset carrier rails of the CCU.

Further preferred, each of the busbars comprises a first connection portion that is protruding from a first short side thereof and further comprises a second connection portion that is protruding from a second short side thereof, wherein the second short side is opposite the first short side. These first and second connection portions of the busbars are configured to be inserted to a reception aperture of a carrier rail. Particularly preferred, the connection portions of the busbars comprise guiding and latching elements that correspond to the guiding and latching means of the reception apertures described above. Particularly, the terminal busbars of the CCU each comprise a first connection portion that is connected to a third reception aperture of a terminal carrier rail and a second connection portion that is connected to a second reception region (i.e., first or second reception aperture) of an inset carrier rail. Further, two inset busbars comprise a first connection portion that is connected to a third reception aperture of a terminal carrier rail and a second connection portion that is connected to a second reception region (i.e., first or second reception aperture) of an inset carrier rail. The remaining inset busbars comprise a first connection portion that is connected to a first reception aperture of an inset carrier rail and a second connection portion that is connected to a second reception aperture of another inset carrier rail.

Further preferred, a middle portion of an inset busbar is configured to be inserted into a reception space of a first reception region. In other words, each inset busbar is connected to two reception apertures with its terminal connection portions and is further connected to a reception space of another inset carrier rail with its middle portion. Hence, each inset busbar is connected to a total of three carrier rails, while terminal busbars are solely connected to two carrier rails. As the inset busbars have a length that is double the length of the terminal busbars, connecting them to three carrier rails advantageously provide a mechanically stable CCU, while a connection to two carrier rails is sufficient for the shorter terminal busbars.

In a further preferred embodiment of the cell connection unit of the present disclosure, at least some of the carrier rails comprise means for attaching a module cover. Therein, the means for attaching the module cover, i.e., a cover of a battery module, preferably comprise first pins that protrude in a normal direction of a cell cover of the battery cells of the battery module and the module cover comprises corresponding openings for receiving those first pins. Further preferred, at least some of the carrier rails comprise means for attaching a temperature sensor, wherein the temperature sensor is preferably configured to detect temperatures of some of the battery cells of the battery module. Therein, the means for connecting the temperature sensor preferably comprise a protrusion that extends from the carrier rail and provide a landing space for the temperature sensor. Further preferred, at least some of the carrier rails comprise means for clipping a cable. Therein, the means for clipping the cable preferably comprise cable clipping means monolithically formed with a carrier rail. Further preferred, the two terminal carrier rails further comprise means for attaching to a housing component of the battery module. Therein, the housing components are preferably housing profiles that form sidewalls of the battery module. Further, the means for connecting to those housing components preferably comprise second pins protruding in a direction opposite to a normal direction of a cell cover of the battery cells of the module and the housing components comprise corresponding openings for receiving those second pins.

Another aspect of the present disclosure relates to a battery module with a cell connection unit, CCU, according to the present disclosure as described above. Therein, the battery module comprises a plurality of battery cells that are aligned in a stacking direction of the battery module. Preferably, the stacking direction is perpendicular to the longitudinal direction of the CCU as described above. Further, each battery cell of the battery module comprises a cell cover with a first, e.g., positive, terminal and with a second, e.g., negative, terminal.

The battery module of the present disclosure further comprises a plurality of busbars. Therein, the busbars comprise two terminal busbars that are each connected to cell terminals of n terminal battery cells, one of which is a terminal battery cell of the module. Further, the remaining busbars of the plurality of busbars are inset busbars that are each connected to cell terminals of 2*n battery cells. Therein, two of the inset busbars are each connected to one terminal battery cells while the remaining cells are inset battery cells. The battery module of the present disclosure further comprise a plurality of carrier rails, two of which are terminal carrier rails and the remaining carrier rails being inset carrier rails.

Further, each inset carrier rail of the battery module of the present disclosure comprises a first reception region with a reception space opened into the longitudinal direction and configured to be mechanically connected to one busbar, and a separate second reception region configured to be connected to two busbars and to electrically insulate the two busbars from each other.

Preferably, each terminal carrier rail is connected to one terminal busbar and one inset busbar and a first reception region of each inset carrier rail is connected to a middle portion of a respective first insert busbar as described above with respect to the CCU of the present disclosure. Further, each inset carrier rail comprises a separate second reception region that has a first reception aperture which is connected to a connection portion of a second insert busbar and further has a second reception aperture that is opposite to and insulated from the first reception aperture. Further, the second reception aperture is connected to a connection portion of a third insert busbar or to a connection portion of a terminal busbar, depending on its position in the CCU.

The battery module of the present disclosure preferably further comprises a module cover with a plurality of first connection openings. According to this embodiment, first connection pins protrude from the carrier rails in a normal direction of the cell covers of the battery cells of the battery module. The first connection pins are inserted into the first connection openings of the battery module cover to form a mechanical connection between CCU and cover. Preferably, the pins comprise latching means for being latched within the openings.

The battery module of the present disclosure further preferred comprises two first housing profiles, each extending along sides of the aligned battery cells in the stacking direction. The battery module further preferred comprises two second housing profiles, each of which is extending along a terminal battery cell of the aligned battery cells in a direction perpendicular to the stacking direction. In other words, together the first and second housing profiles form a housing frame that is enclosing the battery module circumferentially. The battery module may further comprise a base plate and the combination of base plate, housing frame and module cover forms a battery module housing completely enclosing the battery module. According to this embodiment, preferably second connection pins protrude from the carrier rails, particularly preferred from the terminal carrier rails, in a direction opposite a normal direction of the cell covers. Further preferred, the first and/or second housing profiles comprise second connection openings and the second connection pins are inserted into the second connection openings to form a mechanical connection between the CCU and housing frame. Preferably, also the second pins comprise latching means for being latched in the openings.

Further aspects of the present invention are disclosed in the dependent claims, the appended drawing and in the following description thereof.

### Brief Description of the Drawings

Features will become apparent to those of ordinary skill in the art by describing in detail exemplary embodiments with reference to the attached drawings in which:
- Fig. 1: schematically illustrates a cell connection unit, CCU, according to an embodiment;
- Fig. 2: schematically illustrates a battery module according to an embodiment;
- Fig. 3: schematically illustrates an exploded view of the battery module of Figure 2;
- Fig. 4: schematically illustrates a battery module according to another embodiment;
- Fig. 5: schematically illustrates a second reception region of a carrier rail of an embodiment;
- Fig. 6: schematically illustrates a top view of the second reception region of Figure 5;
- Fig. 7: schematically illustrates a side view of the second reception region of Figure 5;
- Fig. 8: schematically illustrates a cover of a battery module according to an embodiment;
- Fig. 9: schematically illustrates details of a carrier rail according to an embodiment;
- Fig. 10: schematically illustrates a housing of a battery module according to an embodiment;
- Fig. 11: schematically illustrates the housing of the battery module of Figure 10.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Processes, elements, and techniques not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise. As used herein, the term "and/or" includes any and all combinations of one or more of the associated listed items. Expressions such as "at least one of," when preceding a list of elements, modify the entire list of elements and do not modify the individual elements of the list.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

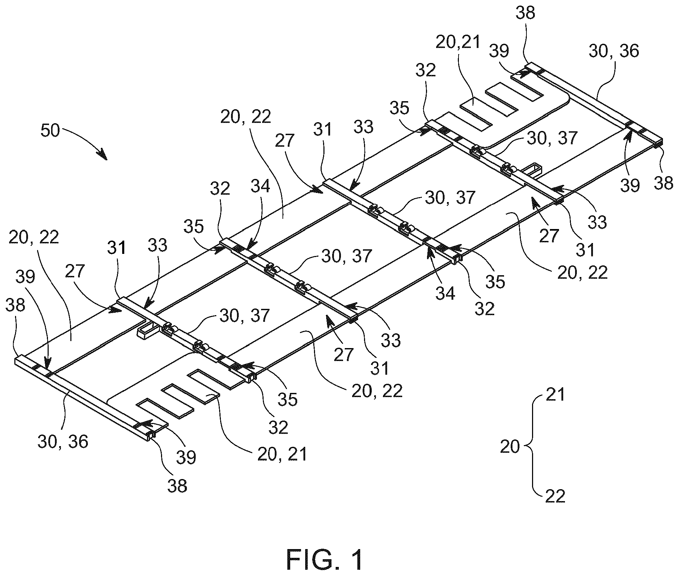

Figure 1 schematically illustrates a cell connection unit 50, CCU, according to an embodiment of the present disclosure. The CCU 50 comprises a plurality of busbars 20 that are interconnected by a plurality of carrier rails 30 to form a rigid structure. The busbars 20 comprise two terminal busbars 21 and four inset busbars 22. The terminal busbars 21 are of half the longitudinal extension as the inset busbars 22 and are further configured to form module terminals, i.e., to be externally contacted. The carrier rails 30 comprise two terminal carrier rails 36 that are disposed at terminal ends of the CCU 50 and the remaining four carrier rails 30 are denoted as inset carrier rails 37 in the following. The carrier rails 30 are formed of a plastic material. Each of the inset carrier rails 37 comprises a first reception region 31 at a first terminal end and a second reception region 32 at an opposite second terminal end. Each of the terminal carrier rails 36 comprises two third reception regions 38, one at each terminal end of the terminal carrier rail 36.

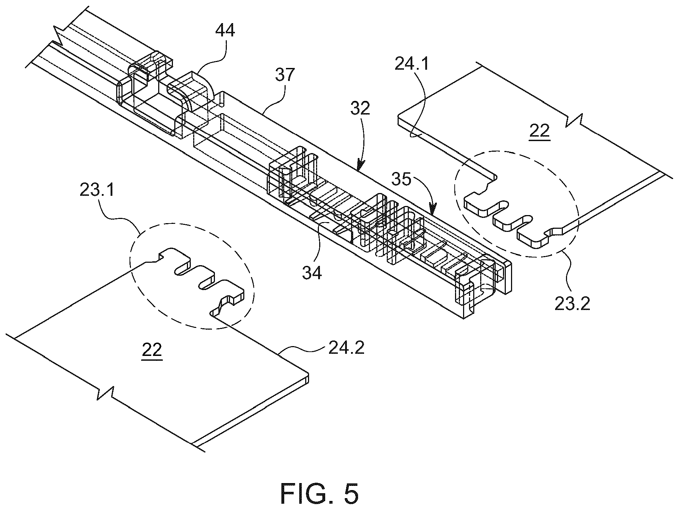

In each of the two third reception regions 38, a third reception aperture 39 is disposed and a connection portion of a terminal busbar 21 is received in a third reception aperture 39 and a connection portion of an inset busbar 22 is received in the other third reception aperture 39. Each first reception region 31 of the inset busbars 22 comprises a reception space 33 and a middle portion 27 of an inset busbar 22 is received in the reception space 33. Further, each of the second reception regions 32 of the inset busbars 22 comprises a first reception aperture 34 and a second reception aperture 35 that are shown in more detail in Figs. 5 to 7.

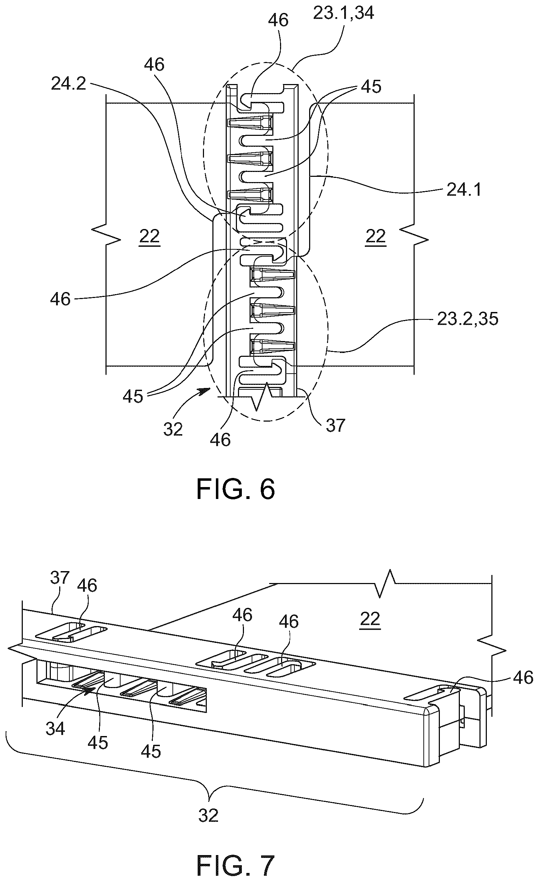

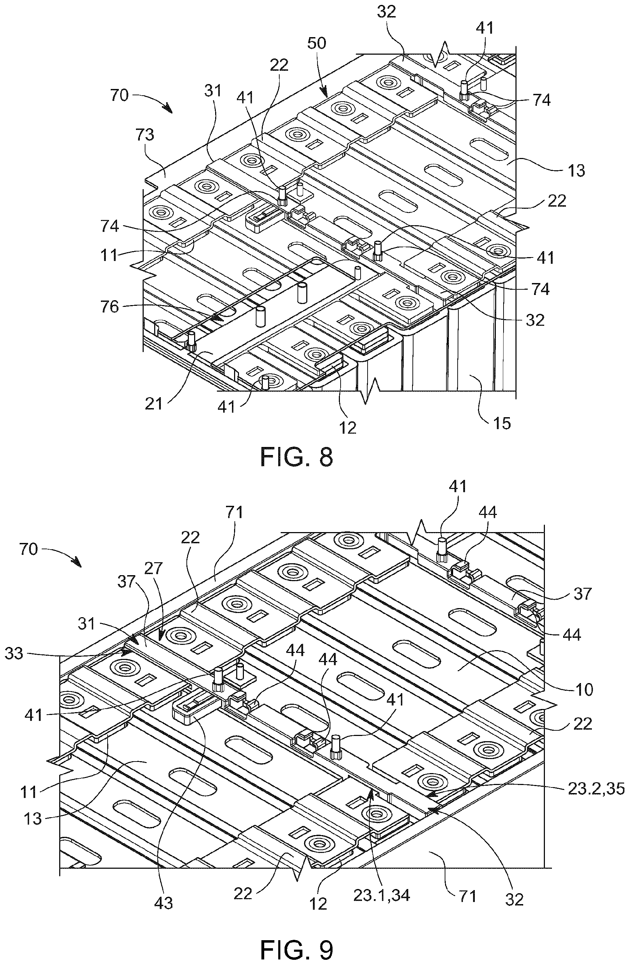

A first reception aperture 34 is an opening that faces in a direction that is perpendicular to the longitudinal direction of the carrier rail 32 and the second reception aperture 35 is an opening that faces in an opposite direction than the first reception aperture 34. A first connection portion (or protruding connection portion) 23.1 protrudes from a second short side 24.2 of an inset busbar 22 and is inserted into the first reception aperture 34. A second connection portion (or another protruding connection portion) 23.2 protrudes from a first short side 24.1 of another inset busbar 22 and is inserted into the second reception aperture 35. Each of the inset busbars 22 comprises the first short side 24.1 with the another protruding connection portion 23.2 and an opposite second short side 24.2 with the protruding connection portion 23.1 (Refer to Fig. 5). Therein, each of the first and second reception apertures 34, 35 comprises guiding means 45 and latching means 46. Therein, the guiding means 45 are formed as two linearly extended protrusions that are fitted to corresponding recesses in the connection portions 23.1, 23.2. Therein, the corresponding shapes of the connection portions 23.1, 23.2 and the guiding means 46 ensure that the inset busbars 22 can be inserted into the reception apertures 34, 35 only with a predefined orientation. Further, the latching means 46 are formed as elastic means that can be pushed sideways by fittingly shaped latching elements of the connection portions 23.1, 23.2 and that are configured to form indentations with those elements. Hence, the connection portions 23.1, 23.2 cannot be easily removed by pulling, once those connection portions 23.1, 23.2 are inserted into the reception apertures 34, 35 (Refer to Fig. 6). The third reception apertures 39 of the third reception regions 38 of the terminal carrier rails 36 comprise similar guiding means and latching means although not illustrated in the Figures. The reception space 33 is best illustrated in Figure 9 and is formed by a U-shape, the opening width of which corresponds to the middle section 27 of an inset busbar 22 and the opening depth, i.e., longitudinal extension, corresponds to the width of an inset busbar 22.

At least some of the carrier rails 30 of the CCU 50, particularly each of the inset carrier rails 37, are mechanically connected to at least three busbars. In each of the inset carrier rails 37, the first reception region 31 is connected to at least one bus bar and the second reception region 32 is connected to two busbars and to electrically insulate these two busbars from each other. The design of the terminal carrier rails 36 may differ from the design of the inset carrier rails 37, as the terminal carrier rails 36 usually have to connect less busbars than the inset carrier rails 37.

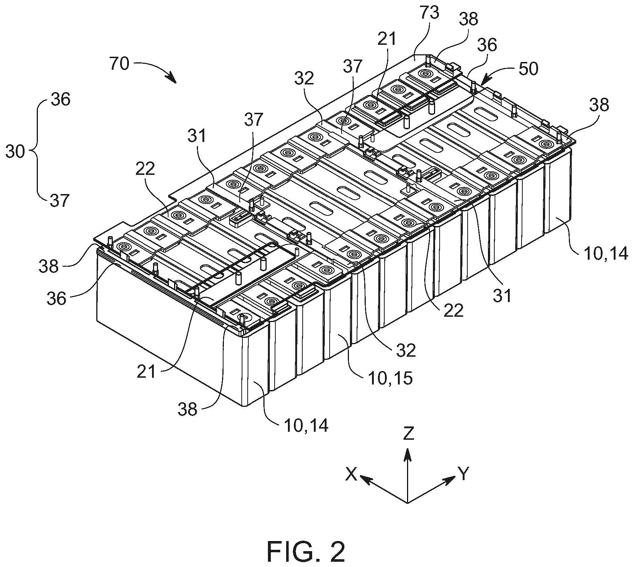

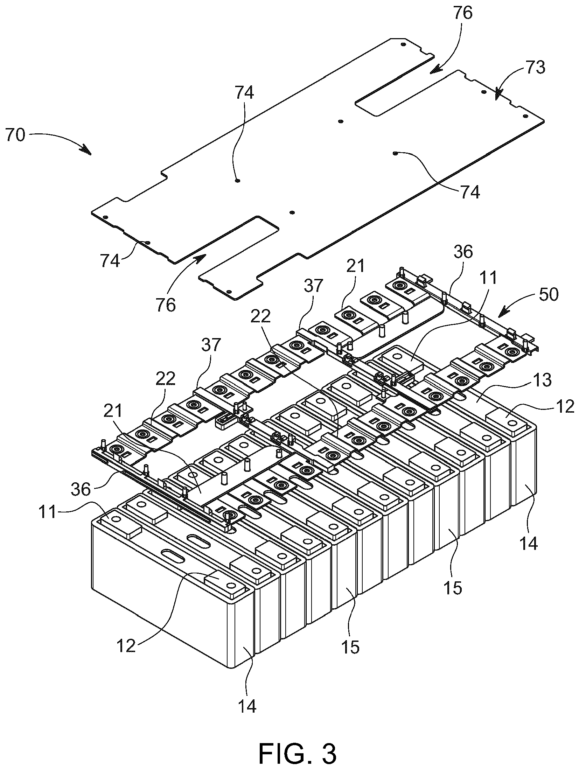

Figure 2 schematically illustrates a perspective view of a battery module 70 according to an embodiment and Figure 3 schematically illustrates an exploded view of the battery module 70 of Figure 2 that comprises a CCU 50 according to an embodiment. The battery module 70 further comprises a plurality of battery cells 10 that are aligned in a stacking direction y of the battery module 70, wherein the stacking direction y is perpendicular to the longitudinal direction x of the carrier rails 30. The battery cells 10 comprise terminal battery cells 14 and inset battery cells 15 stacked in between the terminal battery cells 14. Each battery cell 10 comprises a cell cover 13 on which a first, e.g., positive, cell terminal 11 and a second, e.g. negative, cell terminal 12 are arranged. The battery module 50 comprises a total of twelve battery cells 10 that are arranged in a 4p3s configuration, i.e., with four battery cells 10 electrically connected in parallel and three groups of the battery cells 10 electrically connected in series.

A CCU 50 according to an embodiment is connected to the aligned battery cells 10, wherein the CCU 50 differs from the CCU 50 as illustrated in Figure 1. Particularly, the CCU 50 of Figure 2 comprises two terminal carrier rails 36 and two inset carrier rail 37 and also comprises two terminal busbars 21 and two inset busbars 22 disposed opposite each other with a predetermined distance therebetween. The predetermined distance preferably corresponds to a distance between the positive cell terminal 11 and the negative cell terminal 12 of one battery cell 10. The CCU 50 is connected to the aligned battery cells 10 such that each terminal busbar 21 and each inset busbar 22 is connected to one terminal battery cell 14, respectively. The terminal busbars 21 are further connected to three inset battery cells 15 and the inset busbars 22 are further connected to seven inset battery cells 15. Further, each inset busbar 22 is connected to one terminal carrier rail 36 and two inset carrier rails 37. Above these differences, the CCU 50 of Figures 2, 3 is similar to the CCU 50 as illustrated in Figure 1 and as described above.

The battery module 70 further comprises a module cover 73 that is positioned on top of the CCU 50 such that the CCU 50 is positioned in between the battery cells 10 and the module cover 73. The module cover 73 is made of insulating plastic material in order to electrically insulate the busbars 20 from the environment and is further configured to protect the battery module 70 from external influences. The module cover 73 comprises a plurality of first connection openings 74 that are connected to first connection pins 41 (Refer to Figs. 8 to 11) that protrude from the carrier rails 30 in a normal direction of the cell covers 13 of the battery cells 10 below. The module cover 73 further comprises third connection openings 76 that are positioned above the terminal busbars 21 in order to allow for externally contacting the terminal busbars 21.

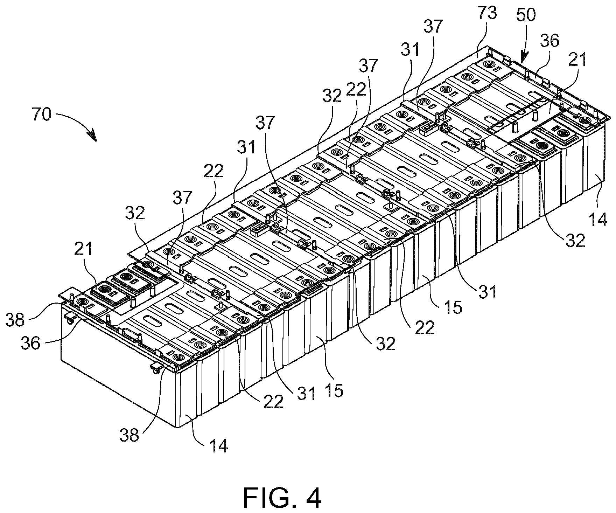

Figure 4 schematically illustrates a battery module 70 according to another embodiment. The battery module 70 comprises a total of twenty battery cells 10 that are arranged in a 4p5s configuration, i.e., with four battery cells 10 connected in parallel and five groups of the battery cells 10 connected in series. The aligned battery cells 10 again comprise two terminal battery cells 14, while the remaining battery cells 10 are referred to as inset battery cells 15. The individual cells 10 are identical to the battery cells 10 as described with respect to Figures 2 and 3. The aligned battery cells 10 are connected to the CCU 50 of Figure 1 as described above with respect to Figure 1. Therein, the CCU 50 is connected to the aligned battery cells 10 such that each terminal battery cell 14 is connected to a terminal busbar 21 and to an inset busbar 22, respectively. The terminal busbars 21 are further connected to three inset battery cells 15 and the inset busbars 22, which are connected to a terminal battery cell 14, are further connected to seven inset battery cells 15. Further, the two inset busbars 22 that are connected to a terminal battery cell 14 are connected to one terminal carrier rail 36 and two inset carrier rails 37, respectively. The two other inset busbars 22 are each connected to three inset carrier rails 37 without being connected to a terminal carrier rail 36. The battery module 70 of Figure 4 also comprises a module cover that is connected to the CCU 50 via connection pins of the CCU 50 and connection openings of the battery module cover.

Figures 5 to 7 illustrate a second reception region 32 of an inset carrier rail 37 of an embodiment in more detail as already described above. The Figures 5 to 7 particularly show the configuration of the first reception aperture 34 and of the second reception aperture 35, each having the guiding means 45 and latching means 46. Figures 5 to 7 further illustrate the configuration of the connection portions 23.1, 23.2 of the inset busbars 22, i.e., with corresponding guiding and latching means. Figures 5 and 7 show perspective views of the second reception region 32 and Figure 6 shows a top view on the second reception region 32. Connection portions of the terminal busbars 21 are configured similarly to the connection portions 23.1, 23.2 of the inset busbars 22 and the third reception apertures 39 of the terminal carrier rails 36 are configured similarly to the first and second reception apertures 34, 35.

Figures 8 to 11 schematically illustrate various details of a battery module 70 according to an embodiment. Therein, Figure 8 illustrates a detailed view of a module cover 73 of a battery module 70 according to an embodiment. Therein, the module cover 73 comprises first connection openings 74, each of which receives a first connection pin 41 for securing the module cover 73 to the CCU 50. Figure 8 further shows in detail the third connection opening 76 that exposes a portion of the terminal busbar 21 in order to provide a module terminal that can be externally contacted. Figure 9 schematically illustrates a similar detailed view of a battery module 70 as in Figure 8 but without the module cover 73 and with an additional first housing profile 71 that extends in the stacking direction along the stacked battery cells 10, particularly along the narrow side surfaces of the stacked battery cell 10.

Further, Figure 9 shows details of the inset carrier rails 37. Figure 9 illustrates the first reception region 31 of the inset carrier rail 37 with the U-shaped reception space 33 and the second reception region 32 of the inset carrier rail 37 with the reception apertures 34, 35. Figure 9 further shows that a whole middle portion 27 of an inset busbar 22 is inserted into the reception space 33 of the first reception region 31 and that connection portions 23.1, 23.2 are inserted into the reception apertures 34, 35 of the second reception region 32. Figure 9 further shows in more detail the first connection pins 41 protruding upward from the inset carrier rail 37 for mechanically fixing the module cover 73 to the battery module 70. Further shown is a temperature sensor attaching means 43 that protrudes sideways from one of the inset carrier rails 37 and is configured to receive a temperature sensor on top. The temperature sensor attaching means 43 further comprises a clipping element for securing the temperature sensor to the temperature sensor attaching means 43. Figure 9 also shows cable attaching means 44, particularly cable clips, that protrude upward from all the insert carrier rails 37 and that are formed monolithically with the inset carrier rails 37.

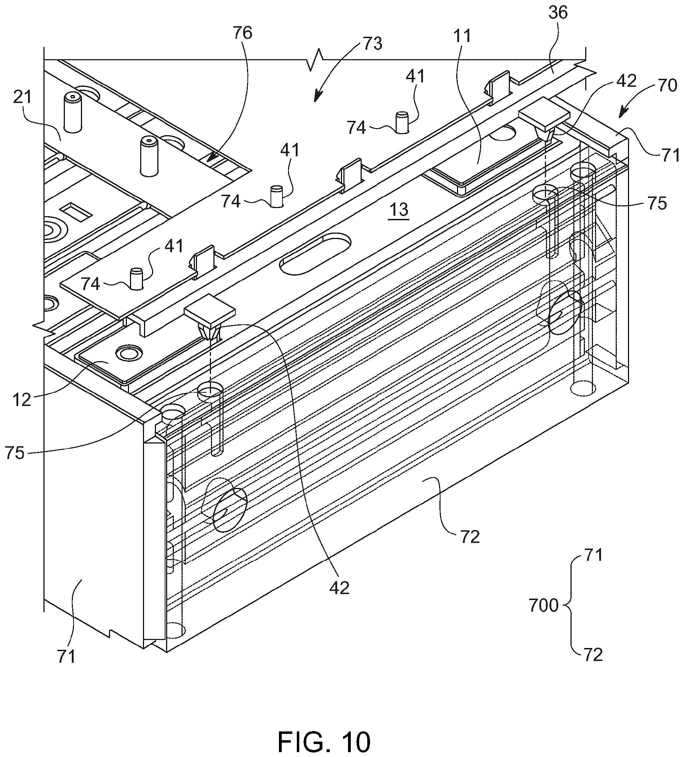

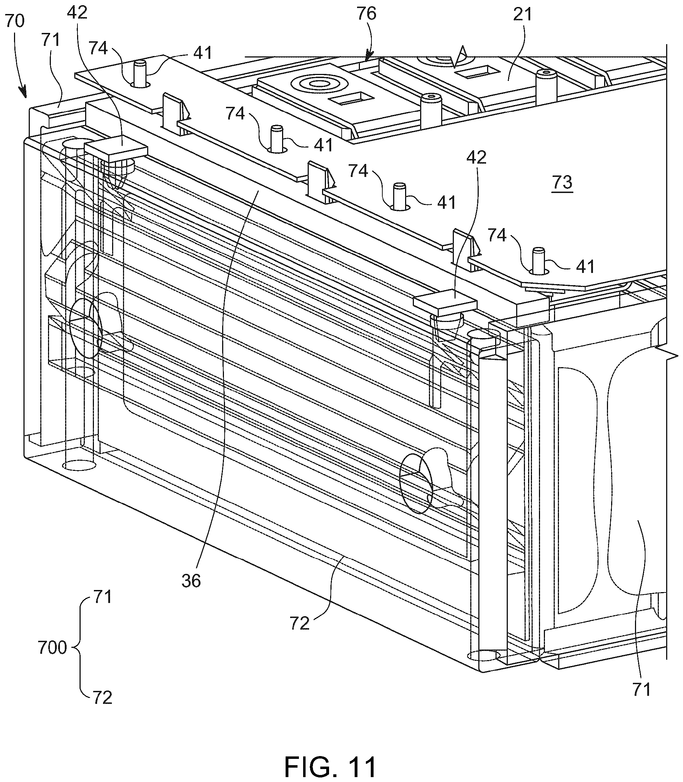

Figures 10 and 11 illustrate further details of a housing 700 of a battery module 70 according to an embodiment. Therein, the housing 700 comprises first housing profiles 71, each of which extends in the stacking direction along the stacked and aligned battery cells 10, i.e., along narrow sides of the battery cells 10. Further, the housing 700 comprises second housing profiles 72 that extend in a direction that is perpendicular to the stacking direction of the cells 10, i.e., parallel to the longitudinal direction of the carrier rails 30. The first and second housing profiles 71, 72 are of the same height as the battery cells 10 or even higher and preferably, the first and second housing profiles 71, 72 are hollow aluminum profiles. The first and second housing profiles 71, 72 may be connected to each other via respective connection means, e.g., a mortise joints or the like, or may be welded to each other. Further, at least the second housing profiles 72 comprise second connection openings 75 in a top surface thereof. These second connection openings 75 are configured to receive second connection pins 42 that protrude downward, i.e., in a direction that is opposite the normal direction of a cell cover 13 of the battery cells 10, from the terminal carrier rails 37. The connection of the second connection pins 42 and the second connection openings 75 mechanically connect the CCU 50 to the housing profiles 71, 72 of the battery module 50.

## Claims

1. Cell connection unit (50), CCU, for connecting a plurality of aligned battery cells (10) of a battery module (70), the CCU (50) comprising:
a plurality of busbars (20) comprising two terminal busbars (21) configured to be connected to cell terminals (11, 12) of n battery cells (10) and wherein the remaining busbars are inset busbars (22) configured to be connected to cell terminals (11, 12) of 2n battery cells (10), wherein each busbar (20) is configured to be connected to cell terminals (11,12) of at least two battery cells (10), and
a plurality of carrier rails (30) configured for interconnecting the busbars (20), the plurality of carrier rails (30) comprising two terminal carrier rails (36) forming terminal ends of the CCU (50) and wherein the remaining carrier rails (30) are inset carrier rails (37) extending in a longitudinal direction and being configured to be mechanically connected to three busbars (20),
wherein each of the plurality of inset carrier rails (37) comprises a first reception region (31) with a reception space (33) opened into the longitudinal direction and configured to be mechanically connected to one busbar (20) and a separate second reception region (32) configured to be mechanically connected to two busbars (20) and to electrically insulate the two busbars (20) from each other.

2. Cell connection unit (50) according to claim 1, wherein two legs of the first reception region (31) enclose the reception space (33) that is configured to receive a busbar (20) being slid into the reception space (33) along the longitudinal direction.

3. Cell connection unit (50) according to claim 1 or 2, wherein the second reception region (32) comprises a first reception aperture (34) oriented in a first direction perpendicular to the longitudinal direction of the carrier rail (30) and a separate second reception aperture (35) oriented in a second direction opposite to the first direction.

4. Cell connection unit (50) according to any one of the preceding claims, wherein the carrier rails (30) are formed of a plastic material.

5. Cell connection unit (50) according to any one of the preceding claims, wherein interconnected pluralities of busbars (20) and carrier rails (30) form a rigid structure that enables automated mounting of the CCU (50) to a battery module (70).

6. Cell connection unit (50) according to any one of the claims 3 to 5, wherein each reception aperture (34, 35) comprises guiding means (45) and latching means (46) for receiving and latching a corresponding connection portion (23) of the busbar (20).

7. Cell connection unit (50) according to any of the preceding claims, wherein the terminal carrier rails (36) comprise two third reception regions (38) at terminal ends thereof, wherein each third reception region (38) comprises a single reception aperture (39) oriented in a direction perpendicularly to the longitudinal direction of the terminal carrier rail (36).

8. Cell connection unit (50) according to claim 3,
wherein each of the plurality of the busbars (20) is bar-shaped with a pair of opposite short busbar sides (24) and comprises a first connection portion (23.1) that is protruding from a first short side (24.1) thereof and a second connection portion (23.2) that is protruding from a second short side (24.2) thereof opposite the first short side (24.1), and
wherein the first and second connection portions (23.1, 23.2) are configured to be inserted to one of the reception apertures (34, 35, 39).

9. Cell connection unit (50) according to any one of preceding claims, wherein a middle portion (27) of the inset busbar (22) is configured to be inserted into a reception space (33) of the first reception region (31).

10. Cell connection unit (50) according to any one of the preceding claims, wherein the at least some of the carrier rails (30) comprise means (41) for attaching a module cover, means (43) for attaching a temperature sensor and/or means (44) for clipping a cable and/or wherein the two terminal carrier rails (36) further comprise means (42) for attaching to a housing component (71, 72) of the battery module (70).

11. Battery module (70), comprising:
a plurality of battery cells (10) aligned in a stacking direction of the battery module (70), each battery cell (10) comprising a cell cover (13) with a first terminal (11) and a second terminal (12);
a plurality of busbars (30), comprising two terminal busbars (21) configured to be connected to cell terminals (11, 12) of n battery cells (10) and wherein the remaining busbars are inset busbars (22) configured to be connected to cell terminals (11, 12) of 2n battery cells (10), wherein each busbar (20) is connected to cell terminals (11,12) of at least two battery cells (10); and
a plurality of carrier rails (30) configured for interconnecting the busbars (20), the plurality of carrier rails (30) comprising two terminal carrier rails (36) forming terminal ends of the CCU (50) and wherein the remaining carrier rails (30) are inset carrier rails (37)extending in a longitudinal direction and being mechanically connected to three busbars (20),
wherein each inset carrier rail (37) comprises:
a first reception region (31) with a reception space (33) opened into the longitudinal direction and configured to be mechanically connected to one busbar (20) , and
a separate second reception region (32) configured to be connected to two busbars (20) and to electrically insulate the two busbars (20) from each other.

12. Battery module (70) according to claim 11:
wherein each terminal carrier rail (36) is connected to a terminal busbar (21) and an inset busbar (22), and
wherein the first reception region (31) of each inset carrier rail (37) is connected to a middle portion (27) of a respective first insert busbar (22), and the second reception region (32) comprises a first reception aperture (34) connected to a connection portion (23) of a second insert busbar (22) and a second reception aperture (35) opposite to and insulated from the first reception aperture (34) and connected to a connection portion (23) of a third insert busbar (22) or of a terminal busbar (21).

13. Battery module (70) according to claim 12, further comprising a module cover (73) with a plurality of first connection openings (74), wherein first connection pins (41) protrude from the carrier rails (30) in a normal direction of the cell covers (13) and are inserted into the first connection openings (74) of the battery module cover (73).

14. Battery module (70) according to claim 12 or 13, further comprising two first housing profiles (71), each extending along sides of the aligned battery cells (10) in the stacking direction, and two second housing profiles (72), each extending along a terminal battery cell (14) of the aligned battery cells (10) in a direction perpendicular to the stacking direction, wherein second connection pins (42) protrude from the carrier rails (30) in a direction opposite a normal direction of the cell covers (13) and are inserted into second connection openings (75) of the first and/or second housing profiles (71, 72).

## Patentansprüche

1. Zellenanschlusseinheit (50), *cell connection unit -* CCU, zum Verbinden einer Mehrzahl von ausgerichteten Batteriezellen (10) eines Batteriemoduls (70), wobei die CCU (50) Folgendes umfasst:
eine Mehrzahl von Sammelschienen (20), umfassend zwei terminale Sammelschienen (21), die dazu ausgestaltet sind, mit Zellklemmen (11, 12) von n Batteriezellen (10) verbunden zu werden, und wobei die verbleibenden Sammelschienen eingesetzte Sammelschienen (22) sind, die dazu ausgestaltet sind, mit Zellklemmen (11, 12) von 2n Batteriezellen (10) verbunden zu werden, wobei jede Sammelschiene (20) dazu ausgestaltet ist, mit Zellklemmen (11, 12) von mindestens zwei Batteriezellen (10) verbunden zu werden, und
eine Mehrzahl von Trägerschienen (30), die zum Verbinden der Sammelschienen (20) untereinander ausgestaltet sind, wobei die Mehrzahl von Trägerschienen (30) zwei terminale Trägerschienen (36) umfasst, die terminale Enden der CCU (50) ausbilden, und wobei die verbleibenden Trägerschienen (30) eingesetzte Trägerschienen (37) sind, die sich in einer Längsrichtung erstrecken und dazu ausgestaltet sind, mechanisch mit drei Sammelschienen (20) verbunden zu werden,
wobei jede der Mehrzahl von eingesetzten Trägerschienen (37) einen ersten Aufnahmebereich (31) mit einem in Längsrichtung geöffneten Aufnahmeraum (33), der dazu ausgestaltet ist, mechanisch mit einer Sammelschiene (20) verbunden zu werden, und einen separaten zweiten Aufnahmebereich (32), der dazu ausgestaltet ist, mechanisch mit zwei Sammelschienen (20) verbunden zu werden und die beiden Sammelschienen (20) elektrisch voneinander zu isolieren, umfasst.

2. Zellenanschlusseinheit (50) nach Anspruch 1, wobei zwei Schenkel des ersten Aufnahmebereichs (31) den Aufnahmeraum (33) umschließen, der dazu ausgestaltet ist, eine Sammelschiene (20) aufzunehmen, die entlang der Längsrichtung in den Aufnahmeraum (33) eingeschoben wird.

3. Zellenanschlusseinheit (50) nach Anspruch 1 oder 2, wobei der zweite Aufnahmebereich (32) eine erste Aufnahmeöffnung (34), die in einer ersten Richtung senkrecht zur Längsrichtung der Trägerschiene (30) ausgerichtet ist, und eine separate zweite Aufnahmeöffnung (35), die in einer zweiten, der ersten Richtung entgegengesetzten Richtung ausgerichtet ist, umfasst.

4. Zellenanschlusseinheit (50) nach einem der vorangehenden Ansprüche, wobei die Trägerschienen (30) aus einem Kunststoffmaterial ausgebildet sind.

5. Zellenanschlusseinheit (50) nach einem der vorangehenden Ansprüche, wobei miteinander verbundene Mehrzahlen von Sammelschienen (20) und Trägerschienen (30) eine starre Struktur ausbilden, die eine automatische Montage der CCU (50) an einem Batteriemodul (70) ermöglicht.

6. Zellenanschlusseinheit (50) nach einem der Ansprüche 3 bis 5, wobei jede Aufnahmeöffnung (34, 35) Führungsmittel (45) und Verriegelungsmittel (46) zum Empfangen und Verriegeln eines entsprechenden Anschlussabschnitts (23) der Sammelschiene (20) umfasst.

7. Zellenanschlusseinheit (50) nach einem der vorangehenden Ansprüche, wobei die terminalen Trägerschienen (36) zwei dritte Aufnahmebereiche (38) an ihren terminalen Enden umfassen, wobei jeder dritte Aufnahmebereich (38) eine einzige Aufnahmeöffnung (39) umfasst, die in einer Richtung senkrecht zur Längsrichtung der terminalen Trägerschiende (36) ausgerichtet ist.

8. Zellenanschlusseinheit (50) nach Anspruch 3,
wobei jede der Mehrzahl der Sammelschienen (20) schienenförmig mit einem Paar gegenüberliegender kurzer Sammelschienenseiten (24) ist und einen ersten Anschlussabschnitt (23.1), der von einer ersten kurzen Seite (24.1) davon vorsteht, und einen zweiten Anschlussabschnitt (23.2), der von einer zweiten kurzen Seite (24.2) davon, gegenüber der ersten kurzen Seite (24.1), vorsteht, umfasst, und
wobei der erste und zweite Anschlussabschnitt (23.1, 23.2) dazu ausgestaltet sind, in eine der Aufnahmeöffnungen (34, 35, 39) eingefügt zu werden.

9. Zellenanschlusseinheit (50) nach einem der vorangehenden Ansprüche, wobei ein mittlerer Abschnitt (27) der eingesetzten Sammelschiene (22) dazu ausgestaltet ist, in einen Aufnahmeraum (33) des ersten Aufnahmebereichs (31) eingefügt zu werden.

10. Zellenanschlusseinheit (50) nach einem der vorangehenden Ansprüche, wobei zumindest ein Teil der Trägerschienen (30) Mittel (41) zum Anbringen einer Modulabdeckung, Mittel (43) zum Anbringen eines Temperatursensors und/oder Mittel (44) zum Anklipsen eines Kabels umfasst und/oder wobei die beiden terminalen Trägerschienen (36) ferner Mittel (42) zum Anbringen an einer Gehäusekomponente (71, 72) des Batteriemoduls (70) umfassen.

11. Batteriemodul (70), umfassend:
eine Mehrzahl von Batteriezellen (10), die in einer Stapelrichtung des Batteriemoduls (70) ausgerichtet sind, wobei jede Batteriezelle (10) eine Zellenabdeckung (13) mit einer ersten Klemme (11) und einer zweiten Klemme (12) umfasst;
eine Mehrzahl von Sammelschienen (30), umfassend zwei terminale Sammelschienen (21), die dazu ausgestaltet sind, mit Zellklemmen (11, 12) von n Batteriezellen (10) verbunden zu werden, und wobei die verbleibenden Sammelschienen eingesetzte Sammelschienen (22) sind, die dazu ausgestaltet sind, mit Zellklemmen (11, 12) von 2n Batteriezellen (10) verbunden zu werden, wobei jede Sammelschiene (20) mit Zellklemmen (11, 12) von mindestens zwei Batteriezellen (10) verbunden ist; und
eine Mehrzahl von Trägerschienen (30), die zum Verbinden der Sammelschienen (20) untereinander ausgestaltet sind, wobei die Mehrzahl von Trägerschienen (30) zwei terminale Trägerschienen (36) umfasst, die terminale Enden der CCU (50) ausbilden, und wobei die verbleibenden Trägerschienen (30) eingesetzte Trägerschienen (37) sind, die sich in einer Längsrichtung erstrecken und mechanisch mit drei Sammelschienen (20) verbunden sind,
wobei jede eingesetzte Trägerschiene (37) Folgendes umfasst:
einen ersten Aufnahmebereich (31) mit einem in Längsrichtung geöffneten Aufnahmeraum (33), der dazu ausgestaltet ist, mechanisch mit einer Sammelschiene (20) verbunden zu werden, und
einen separaten zweiten Aufnahmebereich (32), der dazu ausgestaltet ist, mit zwei Sammelschienen (20) verbunden zu werden und die beiden Sammelschienen (20) elektrisch voneinander zu isolieren.

12. Batteriemodul (70) nach Anspruch 11:
wobei jede terminale Trägerschiene (36) mit einer terminalen Sammelschiene (21) und einer eingesetzten Sammelschiene (22) verbunden ist und
wobei der erste Aufnahmebereich (31) jeder eingesetzten Trägerschiene (37) mit einem mittleren Abschnitt (27) einer jeweiligen ersten eingesetzten Sammelschiene (22) verbunden ist und der zweite Aufnahmebereich (32) eine erste Aufnahmeöffnung (34), die mit einem Anschlussabschnitt (23) einer zweiten eingesetzten Sammelschiene (22) verbunden ist, und eine zweite Aufnahmeöffnung (35), die der ersten Aufnahmeöffnung (34) gegenüberliegt und von dieser isoliert ist und mit einem Anschlussabschnitt (23) einer dritten eingesetzten Sammelschiene (22) oder einer terminalen Sammelschiene (21) verbunden ist, umfasst.

13. Batteriemodul (70) nach Anspruch 12, ferner umfassend eine Modulabdeckung (73) mit einer Mehrzahl von ersten Anschlussöffnungen (74), wobei erste Anschlussstifte (41) in einer Normalenrichtung der Zellenabdeckungen (13) aus den Trägerschienen (30) hervorstehen und in die ersten Anschlussöffnungen (74) der Batteriemodulabdeckung (73) eingefügt sind.

14. Batteriemodul (70) nach Anspruch 12 oder 13, ferner umfassend zwei erste Gehäuseprofile (71), die sich jeweils entlang von Seiten der ausgerichteten Batteriezellen (10) in Stapelrichtung erstrecken, und zwei zweite Gehäuseprofile (72), die sich jeweils entlang einer terminalen Batteriezelle (14) der ausgerichteten Batteriezellen (10) in einer Richtung senkrecht zur Stapelrichtung erstrecken, wobei zweite Anschlussstifte (42) in einer Richtung entgegengesetzt zu einer Normalenrichtung der Zellenabdeckungen (13) aus den Trägerschienen (30) hervorstehen und in zweite Anschlussöffnungen (75) der ersten und/oder zweiten Gehäuseprofile (71, 72) eingefügt sind.

## Revendications

1. Unité de connexion de cellules (50), CCU, pour connecter une pluralité de cellules de batterie alignées (10) d'un module de batterie (70), la CCU (50) comprenant :
une pluralité de barres omnibus (20) comprenant deux barres omnibus de borne (21) configurées pour être connectées à des bornes de cellule (11, 12) de n cellules de batterie (10) et dans laquelle les barres omnibus restantes sont des barres omnibus encastrées (22) configurées pour être connectées à des bornes de cellule (11, 12) de 2n cellules de batterie (10), dans laquelle chaque barre omnibus (20) est configurée pour être connectée à des bornes de cellule (11, 12) d'au moins deux cellules de batterie (10), et
une pluralité de rails porteurs (30) configurés pour interconnecter les barres omnibus (20), la pluralité de rails porteurs (30) comprenant deux rails porteurs de borne (36) formant des extrémités de borne de la CCU (50) et dans laquelle les rails porteurs restants (30) sont des rails porteurs encastrés (37) s'étendant dans une direction longitudinale et étant configurés pour être connectés mécaniquement à trois barres omnibus (20),
dans laquelle chacun de la pluralité de rails porteurs encastrés (37) comprend une première région de réception (31) avec un espace de réception (33) ouvert dans la direction longitudinale et configurée pour être connectée mécaniquement à une barre omnibus (20) et une deuxième région de réception séparée (32) configurée pour être connectée mécaniquement à deux barres omnibus (20) et pour isoler électriquement les deux barres omnibus (20) l'une de l'autre.

2. Unité de connexion de cellules (50) selon la revendication 1, dans laquelle deux branches de la première région de réception (31) entourent l'espace de réception (33) qui est configuré pour recevoir une barre omnibus (20) qui est glissée dans l'espace de réception (33) le long de la direction longitudinale.

3. Unité de connexion de cellules (50) selon la revendication 1 ou 2, dans laquelle la deuxième région de réception (32) comprend une première ouverture de réception (34) orientée dans une première direction perpendiculaire à la direction longitudinale du rail porteur (30) et une deuxième ouverture de réception séparée (35) orientée dans une deuxième direction opposée à la première direction.

4. Unité de connexion de cellules (50) selon l'une quelconque des revendications précédentes, dans laquelle les rails porteurs (30) sont formés d'une matière plastique.

5. Unité de connexion de cellules (50) selon l'une quelconque des revendications précédentes, dans laquelle des pluralités interconnectées de barres omnibus (20) et de rails porteurs (30) forment une structure rigide qui permet un montage automatisé de la CCU (50) sur un module de batterie (70).

6. Unité de connexion de cellules (50) selon l'une quelconque des revendications 3 à 5, dans laquelle chaque ouverture de réception (34, 35) comprend des moyens de guidage (45) et des moyens de verrouillage (46) pour recevoir et verrouiller une partie de connexion correspondante (23) de la barre omnibus (20) .

7. Unité de connexion de cellules (50) selon l'une quelconque des revendications précédentes, dans laquelle les rails porteurs de borne (36) comprennent deux troisièmes régions de réception (38) à leurs extrémités de borne, dans laquelle chaque troisième région de réception (38) comprend une ouverture de réception unique (39) orientée dans une direction perpendiculaire à la direction longitudinale du rail porteur de borne (36).

8. Unité de connexion de cellules (50) selon la revendication 3,
dans laquelle chacune de la pluralité de barres omnibus (20) est en forme de barre avec une paire de côtés courts opposés de barre omnibus (24) et comprend une première partie de connexion (23.1) qui fait saillie depuis un premier côté court (24.1) de celle-ci et une deuxième partie de connexion (23.2) qui fait saillie depuis un deuxième côté court (24.2) de celle-ci opposé au premier côté court (24.1), et
dans laquelle les première et deuxième parties de connexion (23.1, 23.2) sont configurées pour être insérées dans l'une des ouvertures de réception (34, 35, 39).

9. Unité de connexion de cellules (50) selon l'une quelconque des revendications précédentes, dans laquelle une partie médiane (27) de la barre omnibus encastrée (22) est configurée pour être insérée dans un espace de réception (33) de la première région de réception (31).

10. Unité de connexion de cellules (50) selon l'une quelconque des revendications précédentes, dans laquelle lesdits au moins certains des rails porteurs (30) comprennent des moyens (41) de fixation d'un couvercle de module, des moyens (43) de fixation d'un capteur de température et/ou des moyens (44) de clipsage d'un câble et/ou dans laquelle les deux rails porteurs de borne (36) comprennent en outre des moyens (42) de fixation à un composant de boîtier (71, 72) du module de batterie (70).

11. Module de batterie (70), comprenant :
une pluralité de cellules de batterie (10) alignées dans une direction d'empilement du module de batterie (70), chaque cellule de batterie (10) comprenant un couvercle de cellule (13) ayant une première borne (11) et une deuxième borne (12) ;
une pluralité de barres omnibus (30), comprenant deux barres omnibus de borne (21) configurées pour être connectées à des bornes de cellule (11, 12) de n cellules de batterie (10) et dans lequel les barres omnibus restantes sont des barres omnibus encastrées (22) configurées pour être connectées à des bornes de cellule (11, 12) de 2n cellules de batterie (10), dans lequel chaque barre omnibus (20) est connectée à des bornes de cellule (11, 12) d'au moins deux cellules de batterie (10) ; et
une pluralité de rails porteurs (30) configurés pour interconnecter les barres omnibus (20), la pluralité de rails porteurs (30) comprenant deux rails porteurs de borne (36) formant des extrémités de borne de la CCU (50) et dans lequel les rails porteurs restants (30) sont des rails porteurs encastrés (37) s'étendant dans une direction longitudinale et étant connectés mécaniquement à trois barres omnibus (20),
dans lequel chaque rail porteur encastré (37) comprend :
une première région de réception (31) avec un espace de réception (33) ouvert dans la direction longitudinale et configurée pour être connectée mécaniquement à une barre omnibus (20), et
une deuxième région de réception séparée (32) configurée pour être connectée à deux barres omnibus (20) et pour isoler électriquement les deux barres omnibus (20) l'une de l'autre.

12. Module batterie (70) selon la revendication 11 :
dans lequel chaque rail porteur de borne (36) est connecté à une barre omnibus de borne (21) et à une barre omnibus encastrée (22), et
dans lequel la première région de réception (31) de chaque rail porteur encastré (37) est connectée à une partie médiane (27) d'une première barre omnibus d'insert respective (22), et la deuxième région de réception (32) comprend une première ouverture de réception (34) connectée à une partie de connexion (23) d'une deuxième barre omnibus d'insert (22) et une deuxième ouverture de réception (35) opposée à la première ouverture de réception (34), et isolée de celle-ci, et connectée à une partie de connexion (23) d'une troisième barre omnibus d'insert (22) ou d'une barre omnibus de borne (21).

13. Module de batterie (70) selon la revendication 12, comprenant en outre un couvercle de module (73) ayant une pluralité de premières ouvertures de connexion (74), dans lequel des premières broches de connexion (41) font saillie depuis les rails porteurs (30) dans une direction normale des couvercles de cellule (13) et sont insérées dans les premières ouvertures de connexion (74) du couvercle de module de batterie (73).

14. Module de batterie (70) selon la revendication 12 ou 13, comprenant en outre deux premiers profils de boîtier (71), chacun s'étendant le long de côtés des cellules de batterie alignées (10) dans la direction d'empilement, et deux deuxièmes profils de boîtier (72), chacun s'étendant le long d'une cellule de batterie de borne (14) parmi les cellules de batterie alignées (10) dans une direction perpendiculaire à la direction d'empilement, dans lequel des deuxièmes broches de connexion (42) font saillie depuis les rails porteurs (30) dans une direction opposée à une direction normale des couvercles de cellule (13) et sont insérées dans des deuxièmes ouvertures de connexion (75) des premiers et/ou deuxièmes profils de boîtier (71, 72).
